# EUROPÄISCHE PATENTSCHRIFT

(11) **EP 3 669 630 B1**
(45) Veröffentlichungstag und Bekanntmachung des Hinweises auf die Patenterteilung: **03.04.2024**
(21) Anmeldenummer: 19202903.1
(22) Anmeldetag: 14.10.2019
(51) Int. Cl.: A01D 41/02, A01D 67/00, B62D 61/12

(54) **STÜTZRADEINHEIT FÜR EINE LANDWIRTSCHAFTLICHE ERNTEMASCHINE**
SUPPORT WHEEL UNIT FOR AN AGRICULTURAL HARVESTER
UNITÉ DE ROUE DE SUPPORT POUR UN ENGIN D'ABATTAGE-FAÇONNAGE AGRICOLE

(30) Priorität: 20.12.2018 DE 102018133163
(43) Veröffentlichungstag der Anmeldung: 24.06.2020
(73) Patentinhaber: CLAAS Selbstfahrende Erntemaschinen GmbH, 33428 Harsewinkel (DE)
(72) Erfinder: Schilder, Frank, 33604 Bielefeld (DE); Müller, Matthias, 59387 Ascheberg (DE)
(74) Vertreter: CLAAS Gruppe

(56) Entgegenhaltungen:
- EP-A2- 3 461 660
- US-A- 4 079 798
- US-A1- 2003 010 553
- US-B2- 8 820 758

## Beschreibung

Die vorliegende Anmeldung betrifft eine Stützradeinheit für eine selbstfahrende Erntemaschine gemäß dem Oberbegriff von Anspruch 1. Weiterhin betrifft die vorliegende Anmeldung eine landwirtschaftliche Erntemaschine gemäß Anspruch 13, die insbesondere von einem Mähdrescher gebildet sein kann.

Die Stützradeinheit dient dazu, eine auf einer Hinterachse der jeweiligen Erntemaschine gestützte Last in den Untergrund abzutragen, wobei insbesondere die Hinterachse der Erntemaschine als solche entlastet werden soll. Zudem soll die Möglichkeit geschaffen werden, das Gesamtgewicht Erntemaschine anzuheben, wobei die Mehrbelastung mittels der Stützradeinheit abgetragen werden kann. Hierzu umfasst die Stützradeinheit mindestens einen Rahmen, mittels dessen die Stützradeinheit in Kraft übertragender Weise mit einer übergeordneten Erntemaschine verbindbar ist. Insbesondere ist es denkbar, die Stützradeinheit mittels des Rahmens an einen im Bereich der Hinterachse der Erntemaschine angeordneten Querträger anzuschließen. Weiterhin umfasst die Stützradeinheit mindestens ein Stützrad, das um eine Rotationsachse rotierbar an der Stützradeinheit gelagert ist, sodass das Stützrad auf einem Untergrund abrollen kann. Mittels des Stützrads findet die gewünschte Kraftübertragung in den Untergrund statt.

Weiterhin umfasst die Stützradeinheit ein Hebezeug, insbesondere in Form einer hydraulischen oder elektro-hydraulischen Kolben-Zylinder-Einheit, mittels derer das Stützrad bewegbar, insbesondere anheb- und absenkbar, ist. Auf diese Weise ist das Stützrad mittels des Hebezeugs zwischen einer angehobenen Feldposition und einer abgesenkten Straßenposition bewegbar. Dem liegt die Überlegung zugrunde, dass die Belastung der Hinterachse einer jeweiligen Erntemaschine, infolge derer es des Einsatzes eines Stützrades bedarf, insbesondere während einer Fahrt der Erntemaschine über öffentliche Verkehrswege vorliegt. Dies kann beispielsweise dadurch bedingt sein, dass ein Arbeitsorgan der Erntemaschine für die Fahrt der Erntemaschine über eine Straße mittels eines Anhängers an die Erntemaschine angehängt wird, wobei die Anhängelast des Anhängers typischerweise über ein Zugmaul auf die Hinterachse der Erntemaschine gebracht wird. Diese Belastung ist in einer Erntesituation, in der die Erntemaschine auf einem jeweiligen Feld eingesetzt wird, nicht gegeben, sodass der Einsatz des Stützrades während der Ernte als solcher typischerweise nicht erforderlich ist. Nach alldem ist es vorteilhaft, das Stützrad zwischen der abgesenkten Straßenposition (in der das Stützrad unterstützend wirken kann) und der angehobenen Feldposition (in der das Stützrad wirkungslos ist) bewegen zu können, sodass das Stützrad für eine Fahrt der Erntemaschine über die Straße aktiviert und für den tatsächlichen Ernteeinsatz auf dem Feld deaktiviert werden kann.

Weiterhin ist das Stützrad zumindest bei Vorliegen in seiner Straßenposition relativ zu dem Rahmen um eine vertikale Drehachse drehbar gelagert. Der Begriff der "Drehachse" meint im Folgenden immer diese vertikale Drehachse, die einen Freiheitsgrad schafft, der eine Lenkbewegung des Stützrades erlaubt. Davon unterschieden wird die "Rotationsachse", um die das Rad rotieren und hierdurch auf einem Untergrund abrollen kann. Mittels der Drehachse kann das Stützrad im Sinne einer Nachlauffunktion bei einer Kurvenfahrt der Erntemaschine seine Drehposition relativ zu dem Rahmen verändern und auf diese Weise der Kurvenfahrt folgen. Hierdurch wird vermieden, dass das Stützrad bei einer Kurvenfahrt der Erntemaschine auf dem Untergrund "radiert". Ebenso ist es denkbar, dass das Stützrad aktiv lenkbar ist, wobei insbesondere eine Kopplung einer Lenkbewegung an eine Lenkbewegung der Erntemaschine von Vorteil sein könnte.

Stützradeinheiten der eingangs beschriebenen Art sind im Stand der Technik bereits bekannt. Hierzu wird beispielhaft auf das US Patent 8,820,758 B2 verwiesen.

Im Stand der Technik hat es sich als problematisch erwiesen, nachlaufgesteuerte Stützräder zu verwenden, da diese frei um ihre Drehachse drehbar gelagert sein müssen. Dies trifft zudem typischerweise unabhängig von einer Position des Stützrades zu, sodass die freie Drehbarkeit des Stützrades auch in einer von dem Untergrund abgehobenen Position gegeben ist. In einer solchen abgehobenen Position befindet sich das Stützrad nicht im Eingriff mit einem Untergrund, sodass es frei um seine Drehachse pendeln kann. Hierbei kann es in nachteiliger Weise zu Kollisionen des sich drehenden Stützrades mit anderen Gegenständen kommen, die zu Beschädigungen des Stützrades selbst oder der jeweiligen anderen Gegenstände führen können.

Der vorliegenden Anmeldung liegt mithin die Aufgabe zugrunde, eine Stützradeinheit hervorzubringen, mittels derer ein Beschädigungsrisiko im Zuge einer Anhebung des Stützrades reduziert ist.

Die zugrunde liegende Aufgabe wird erfindungsgemäß mittels einer Stützradeinheit mit den Merkmalen des Anspruchs 1 gelöst. Vorteilhafte Ausgestaltungen ergeben sich aus den Unteransprüchen 2 bis 12.

Die erfindungsgemäße Stützradeinheit ist durch eine Arretiereinrichtung zur Reduktion des Winkelbereichs, innerhalb dessen das Stützrad um seine vertikale Drehachse drehbar ist, gekennzeichnet, mittels derer das Stützrad im Zuge seiner Überführung zwischen der Feldposition und der Straßenposition zumindest zeitweise derart führbar ist, dass die bei Vorliegen des Stützrads in seiner Straßenposition gegebene Drehbarkeit des Stützrads um die Drehachse eingeschränkt ist. Die Arretiereinrichtung ist dabei vorzugsweise derart ausgebildet, dass die Drehbarkeit des Stützrades um die Drehachse bei Vorliegen desselben in seiner Straßenposition nicht behindert ist, sodass das Drehrad seine Nachlauffunktion erhält. Weiterhin ist es von Vorteil, wenn die Drehbarkeit des Stützrades um die Drehachse bei Erreichen der Feldposition vollständig aufgehoben ist und das Stützrad mithin vollständig arretiert ist. Zudem ist von Vorteil, wenn ein Übergang zwischen "freier Drehbarkeit" und "wenig Drehbarkeit" (vorzugsweise "keinerlei Drehbarkeit") sukzessive im Zuge der Bewegung des Stützrades erfolgt. Erfindungsgemäß ist vorgesehen, dass das Stützrad mit zunehmender Anhebung mittels des Hebezeugs sukzessive zunehmend arretiert wird, sodass die Drehbarkeit des Stützrades um die Drehachse zunehmend, vorzugsweise bis auf null, reduziert wird. Umgekehrt kann die Drehbarkeit bei einer Absenkung des Drehrades sukzessive freigegeben werden, bis sie spätestens bei Erreichen der Straßenposition des Stützrades maximal ist. Der Vorteil einer Drehbarkeit auch bei einem etwas angehobenen Stützrad ist z.B. darin zu sehen, dass das Stützrad auch bei einer Hindernisüberfahrt noch um die Drehachse drehen kann.

Die erfindungsgemäße Stützradeinheit hat viele Vorteile. Insbesondere wird durch die Verminderung der Drehbarkeit des Stützrades um seine Drehachse im Zuge von dessen durch das Hebezeug bedingten Bewegung verhindert, dass sich das Stützrad in einer gegenüber der Straßenposition angehobenen Position frei um die Drehachse dreht und hierbei schlimmstenfalls mit anderen Gegenständen der Stützradeinheit oder der zugeordneten Erntemaschine kollidiert. Da dieses Risiko in aller Regel nur für den Fall besteht, dass das Stützrad ungehindert und insbesondere unkontrolliert um seine Drehachse drehbar ist, ist eine zumindest teilweise Arretierung im Sinne einer Reduktion des Winkelbereichs, innerhalb dessen das Stützrad grundsätzlich um die Drehachse drehbar ist, nur dann erforderlich, wenn sich das Stützrad nicht in unmittelbarem Kontakt mit einem Untergrund, beispielsweise einer Straße, befindet. Folglich ist die Verknüpfung von "Arretierung des Stützrades" mit dem Vorgang "Anhebung des Stützrades" besonders vorteilhaft, da hierdurch die gewünschte Drehung des Stützrades um die Drehachse bei einer Fahrt der zugeordneten Erntemaschine über die Straße gegeben ist und gleichzeitig die Verminderung des Beschädigungsrisikos bei einer gegenüber der Straßenposition abgehobenen Position des Stützrades erreicht wird.

Die erfindungsgemäße Stützradeinheit ist dann besonders von Vorteil, wenn die Drehbarkeit des Stützrades um die Drehachse - ausgehend von dessen Straßenposition - mit zunehmender Abhebung von dem Untergrund bzw. mit zunehmender Annäherung an die Feldposition zunehmend eingeschränkt ist. Vorteilhafterweise ist die Arretiereinrichtung dabei derart ausgebildet, dass das Stützrad bei Erreichen der Feldposition vollständig arretiert ist und mithin die Drehbarkeit des Stützrades um die Drehachse vollständig blockiert. Die sukzessive zunehmende Arretierung des Stützrades im Zuge seiner Überführung in Richtung der Feldposition wird dem Umstand gerecht, dass ein Beschädigungsrisiko typischerweise umso mehr besteht, desto weiter das Stützrad von dem Untergrund abgehoben bzw. von seiner Straßenposition weg bewegt wird. Somit besteht typischerweise das größte Kollisionsrisiko des Stützrades mit anderen Gegenständen, beispielsweise mit ein Zugmaul tragenden Streben, primär bei Vorliegen des Stützrades in seiner Feldposition oder einer der Feldposition nahen Position.

In einer vorteilhaften Ausgestaltung der erfindungsgemäßen Stützradeinheit umfasst die Arretiereinrichtung mindestens zwei dem Rahmen zugeordnete Führungselemente sowie mindestens ein dem Stützrad zugeordnetes Arretierelement. Die Führungselemente sind dazu geeignet, mit dem Arretierelement derart zusammenzuwirken, dass das Arretierelement im Zuge der Bewegung des Stützrades relativ zu dem Rahmen zwischen den beiden Führungselementen einfassbar ist. Dies hat zur Folge, dass das Stützrad hinsichtlich eines Arretierbereichs, innerhalb dessen es um die Drehachse drehbar ist, beschränkt wird, wobei der Arretierbereich infolge eines Anschlags des mindestens einen Arretierelements an den beiden Führungselementen sowohl "nach links" als auch "nach rechts" betrachtet von einer Nulllage des Stützrads begrenzt ist. Vorzugsweise sind die Führungselemente derart angeordnet, dass das Arretierelement zumindest bei Vorliegen des Stützrades in seiner Feldposition vollständig zwischen den Führungselementen "eingeklemmt" ist, sodass das Stützrad vollständig arretiert und mithin nicht mehr um die Drehachse drehbar ist.

Eine sukzessiv zunehmende Arretierung des Stützrades kann beispielsweise dadurch erreicht werden, dass die Führungselemente relativ zueinander geneigt sowie in Richtung auf die Feldposition des Stützrades betrachtet aufeinander zu laufend ausgebildet sind. Auf diese Weise wird mit einer zunehmenden Anhebung des Stützrades in Richtung seiner Feldposition der Effekt erzielt, dass das dem Stützrad zugeordnete Arretierelement zunehmend in Richtung einer engsten Stelle zwischen den Führungselementen geführt wird, wobei mit zunehmender Anhebung des Stützrads der Arretierbereich, innerhalb dessen das Stützrad drehbar ist, zunehmend verengt wird.

Grundsätzlich ist es im Interesse einer über den sich zwischen der Feldposition und der Straßenposition erstreckenden Bewegungsraum des Stützrades veränderlichen Arretierwirkung der Arretiereinrichtung vorteilhaft, wenn die Führungselemente von langgestreckten Führungsleisten gebildet sind. Mittels solcher Führungsleisten besteht - wie im vorstehend skizziertem Beispiel veranschaulicht - die Möglichkeit, einen Wirkungsbereich zu erzeugen, innerhalb dessen die Führungsleisten wirken und insbesondere mittels geschickten Zusammenspiels zwischen mindestens einem Arretierelement und den Führungsleisten eine veränderliche Arretierwirkung in Abhängigkeit einer Position des Stützrades relativ zu dem Rahmen entfalten können. Zudem sind die beschriebenen Führungsleisten besonders einfach reinigbar, was im Hinblick auf die in aller Regel hohe Schmutzbelastung einen praktischen Vorteil bietet.

Weiterhin kann es von besonderem Vorteil sein, wenn die Führungselemente gemeinsam an einer, vorzugsweise einstückigen, Führungseinrichtung ausgebildet sind, die in Kraft übertragender Weise mittelbar oder unmittelbar an dem Rahmen angeordnet ist. Vorzugsweise ist die Führungseinrichtung an dem Hebezeug, insbesondere einem Zylinder eines als Kolben-Zylinder-Einheit ausgebildeten Hebezeugs, montierbar. Die Anordnung der Führungseinrichtung an dem Rahmen, insbesondere an dem Hebezeug selbst, hat zur Folge, dass das Stützrad im Zuge seiner mittels des Hebezeugs bewirkten Bewegung relativ auch zu der Führungseinrichtung bewegbar ist. Die Führungseinrichtung kann insbesondere dazu beitragen, die Führungselemente in einer Stellung relativ zu dem Stützrad zu positionieren, in der ein optimales Zusammenwirken mit mindestens einem Arretierelement gegeben ist.

In einer besonders vorteilhaften Ausgestaltung verfügt die Arretiereinrichtung über mindestens zwei dem Stützrad zugeordnete Arretierelemente. Diese sind vorzugsweise auf einander gegenüberliegenden Seiten der Drehachse des Stützrades angeordnet, wobei vorzugsweise jeweils eines der Arretierelemente dazu vorgesehen ist, mit einem der Führungselemente zusammenzuwirken. Mit anderen Worten sind die Arretierelemente vorzugsweise jeweils einem der Führungselemente zugeordnet. Die Verwendung zweier Arretierelemente schafft einen größeren Spielraum bei der Einstellbarkeit der Arretierwirkung, wobei insbesondere Anschlagstellen zwischen einem jeweiligen Arretierelement und einem jeweiligen Führungselement gezielt auf beiden Seiten der Drehachse des Stützrades gesetzt werden können. Dies ist besonders gut anhand des unten stehenden Ausführungsbeispiels nachvollziehbar.

Vorteilhafterweise sind die Arretierelemente bezogen auf einen Drehebene, die die Drehachse enthält, spiegelsymmetrisch angeordnet. Bezogen auf die übergeordnete Erntemaschine, an der die Stützradeinheit angeordnet ist, ist die Drehebene vorteilhafterweise parallel zu einer Fahrtrichtung der Erntemaschine orientiert, sodass die Drehebene gewissermaßen von einer die Fahrtrichtung repräsentierenden Achse und der Drehachse des Stützrades aufgespannt ist. Vorzugsweise sind die Arretierelemente gegenläufig geneigt bezogen auf die Drehebene orientiert, sodass sie gewissermaßen aufeinander zu laufend ausgebildet sind. Auf diese Weise bilden die Arretierelemente gemeinsam einen Arretierkeil. Dieser ist vorteilhafterweise derart ausgebildet, dass ein sich zwischen den Arretierelementen erstreckender Winkelbereich sich über einen Winkel zwischen 40° und 100°, vorzugsweise zwischen 50° und 90°, weiter vorzugsweise zwischen 60° und 80°, erstreckt. Bei einer symmetrischen Ausgestaltung hat dies zur Folge, dass ein jeweiliges Arretierelement mit der Drehebene einen Winkel von mindestens 40°, vorzugsweise mindestens 45°, einschließt.

Bei Verwendung mindestens zweier Arretierelemente kann es überdies besonders vorteilhaft sein, wenn diese an einer Lagergabel des Stützrades angeordnet sind. Die Lagergabel ist primär für die Ausgestaltung des Nachlaufs vorteilhaft, da mittels der Lagergabel ein Versatz zwischen der vertikalen Drehachse, um die das Stützrad drehbar ist, und einem Aufsetzpunkt des Stützrades auf dem Untergrund erzeugbar ist. Dieser Versatz sorgt für die gewünschte Nachlauffunktion des Stützrades. Unabhängig von dieser grundlegenden Funktionalität wirkt die Lagergabel mit einem Anschlag zusammen, der dazu geeignet ist, in Abhängigkeit einer Drehposition des Stützrades um die Drehachse bezogen auf den Rahmen mit den Arretierelementen anzuschlagen. Dies hat zur Folge, dass das Stützrad bei Vorliegen in seiner Straßenposition lediglich innerhalb eines begrenzten Winkelbereichs um seine Drehachse verdrehbar ist, wobei dieser Winkelbereich zu beiden Seiten der Nulllage des Stützrades mittels Anschlags eines jeweiligen Arretierelements an dem Anschlag der Lagergabel begrenzt ist. Der Winkelbereich erstreckt sich vorzugsweise über mindestens 40° beidseits der Nulllage, vorzugsweise über mindestens 45°, weiter vorzugsweise über mindestens 50°.

Unabhängig von der Ausgestaltung der Arretiereinrichtung kann es grundsätzlich vorteilhaft sein, wenn der Rahmen mindestens eine Schwinge umfasst, an der das Stützrad gelagert ist. Diese Schwinge ist dadurch gekennzeichnet, dass sie unter Ausbildung einer Schwenkachse relativ zu dem übrigen Rahmen verschwenkbar ist. Diese Schwenkachse ist vorzugsweise horizontal sowie weiter vorzugsweise senkrecht zu einer Fahrtrichtung der übergeordneten Erntemaschine orientiert. Die Ausgestaltung einer solchen Schwinge hat den besonderen Vorteil, dass die Bewegung des Stützrades zwischen seiner Straßenposition und seiner Feldposition mittels Verschwenkens der Schwinge um dessen Schwenkachse erfolgen kann. Hierbei wirkt die Schwinge vorzugsweise unmittelbar mit dem Hebezeug zusammen, sodass sich das Stützrad im Zuge der Betätigung des Hebezeugs auf einer Kreisbahn um die Schwenkachse bewegt. Insbesondere ist die Schwinge mittels Betriebs des Hebezeugs zwischen einer Hochstellung und einer Tiefstellung verschwenkbar, wobei vorzugsweise die Hochstellung der Schwinge mit der Feldposition des Stützrades und die Tiefstellung der Schwinge mit der Straßenposition des Stützrades korrespondieren.

Die vorstehend beschriebene Ausgestaltung einer Schwinge ist insbesondere in Kombination mit einem vorstehend als vorteilhaft beschriebenen Arretierkeil günstig, der von mindestens zwei Arretierelementen gebildet ist. Dem liegt die Überlegung zugrunde, dass der Arretierkeil aufgrund seiner sich über seine Länge hinweg ändernden wirksamen Breite eine Möglichkeit bietet, eine Anschlagcharakteristik der Arretierelemente an den zugeordneten Führungselementen mittels Bewegung der Arretierelemente relativ zu den Führungselementen zu verändern. Somit ist es besonders vorteilhaft, wenn der von den Arretierelementen gebildete Arretierkeil im Zuge der Verschwenkung der Schwinge um die Schwenkachse zwischen die Führungselemente einziehbar ist, sodass mit zunehmendem Einzug des Arretierkeils zwischen die Führungselemente der Arretierbereich, innerhalb dessen das Stützrad um dessen Drehachse bis zum Anschlag eines jeweiligen Arretierelements an dem ihm zugeordneten Führungselement drehbar ist, sukzessive verkleinert wird. Vorteilhafterweise wirken die Führungselemente, die Schwinge und der Arretierkeil derart zusammen, dass die Drehbarkeit des Stützrades um die Drehachse bei Erreichen seiner Feldposition, die mit der Hochstellung der Schwinge korrespondiert, vollständig blockiert ist. Bei dem beschriebenen "Einziehen" des Arretierkeils zwischen den Führungselementen wird der technische Effekt ausgenutzt, dass sich das Stützrad gemeinsam mit den ihm zugeordneten Arretierelementen bezogen auf den Rahmen - und mithin bezogen auf die dem Rahmen zugeordneten Führungselemente - auf einer Kreisbahn bewegt. Folglich ist es besonders einfach möglich, die Führungselemente derart relativ zu dem Stützrad bzw. den Arretierelementen zu positionieren, dass mit zunehmender Verschwenkung der Schwinge der von den Arretierelementen gebildete Arretierkeil zunehmend zwischen die Führungselemente, die vorzugsweise von langgestreckten Führungsleisten gebildet sind, "einfährt". Der Bewegungsspielraum hinsichtlich einer Drehung des Stützrades um dessen Drehachse nimmt dabei mit zunehmendem Einfahren des Arretierkeils zwischen die Führungselemente sukzessive ab, sodass der vorteilhafte Effekt einer Abhängigkeit zwischen der Bewegung des Stützrades und der Arretierwirkung der Arretiereinrichtung realisiert ist.

Ausgehend von einer selbstfahrenden Erntemaschine wird die zugrunde liegende Aufgabe erfindungsgemäß mittels einer Erntemaschine mit den Merkmalen des Anspruchs 13 gelöst. Eine vorteilhafte Ausgestaltung ergibt sich aus dem Unteranspruch 14.

Die Erntemaschine, die insbesondere von einem Mähdrescher gebildet sein kann, umfasst erfindungsgemäß mindestens eine erfindungsgemäße Stützradeinheit gemäß vorstehender Beschreibung. Die sich hierdurch ergebenden Vorteile sind vorstehend bereits dargelegt. Insbesondere wird die Möglichkeit geschaffen, das Stützrad im Zuge seiner Überführung zwischen seiner Straßenposition, in der es in unmittelbarem Kontakt mit dem Untergrund steht, und seiner Feldposition, in der es von dem Untergrund abgehoben ist, zumindest teilweise zu arretieren und mithin an einer freien Verdrehung um seine Drehachse zu hindern. Dies bietet den Vorteil, dass ein Beschädigungsrisiko infolge einer Kollision des Stützrades mit anderen Gegenständen der Stützradeinheit oder der Erntemaschine zumindest reduziert, vorzugsweise eliminiert, ist.

In einer vorteilhaften Ausgestaltung der erfindungsgemäßen Erntemaschine ist eine Rotationsachse mindestens eines Stützrades der Stützradeinheit, um die das Stützrad rotierbar und mithin auf einem Untergrund abrollbar ist, zumindest bei Vorliegen des Stützrades in seiner Feldposition quer zu einer Fahrtrichtung der Erntemaschine orientiert. Dies hat zur Folge, dass das Stützrad als solches bei Vorliegen zumindest in seiner Feldposition in Fahrtrichtung der Erntemaschine ausgerichtet ist. Diese Orientierung des Stützrades hat sich hinsichtlich des zur Verfügung stehenden Raums insbesondere an einer Hinterachse der Erntemaschine, an der die Stützradeinheit typischerweise angeordnet ist, als vorteilhaft herausgestellt.

Die Erfindung ist nachstehend anhand zweier Ausführungsbeispiele, die in den Figuren dargestellt sind, näher erläutert. Es zeigt:
- Fig. 1:: Einen Querschnitt durch eine erfindungsgemäße Erntemaschine, die eine erfindungsgemäße Stützradeinheit umfasst,
- Fig. 2:: Ein Detail der Stützradeinheit gemäß Figur 1, wobei sich ein Stützrad der Stützradeinheit in seiner Straßenposition befindet,
- Fig. 3:: Ein weiteres Detail der Stützradeinheit gemäß Figur 1,
- Fig. 4:: Ein weiteres Detail der Stützradeinheit gemäß Figur 1,
- Fig. 5:: Ein weiteres Detail der Stützradeinheit gemäß Figur 1, wobei sich das Stützrad in seiner Feldposition befindet,
- Fig. 6:: Eine perspektivische Ansicht einer alternativen Stützradeinheit, die zwei Stützräder umfasst.

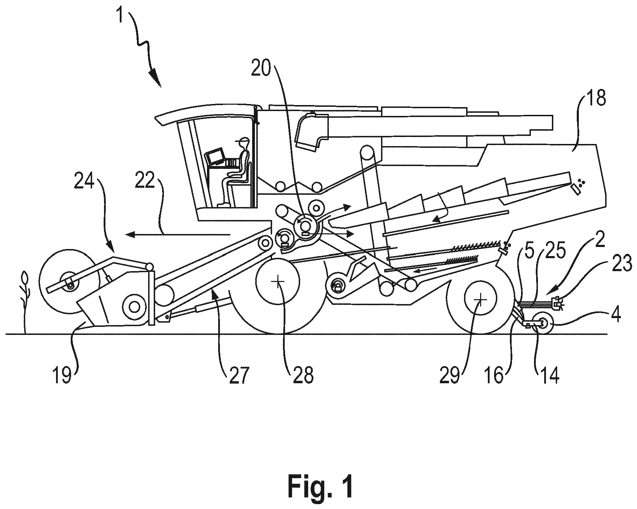

Ein erstes Ausführungsbeispiel, das in den **Figuren 1 bis 5** gezeigt ist, beschreibt eine Stützradeinheit **2,** die an einer landwirtschaftlichen Erntemaschine **1** angeordnet ist. Die Erntemaschine **1** ist hier von einem Mähdrescher gebildet, der mit einer Mehrzahl von Arbeitsorganen ausgestattet ist. Somit umfasst die Erntemaschine **1** beispielsweise ein Arbeitsorgan **19,** das von einem Mähbalken gebildet ist. Weiterhin umfasst die Erntemaschine **1** ein Arbeitsorgan **20,** mittels dessen die Pflanzen verarbeitbar sind. Bei letztgenanntem Arbeitsorgan **20** handelt es sich um ein Dreschorgan, mittels dessen Früchte der Pflanzen von Pflanzenresten trennbar sind. Das Arbeitsorgan **19** ist einem Schneidwerk **24** zugeordnet. Das Schneidwerk **24** dient dazu, die Pflanzen zu schneiden und gebündelt in Richtung des Arbeitsorgans **20** zu leiten. Die Erntemaschine **1** ist in **Figur 1** beispielhaft während eines Erntebetriebs dargestellt, in dem sich die Erntemaschine **1** auf einem Feld befindet, auf dem der jeweilige Erntebetrieb stattfindet. Das Schneidwerk **24,** das an einem vorderen Ende der Erntemaschine **1** an einem Schrägförderer **27** angeordnet ist, weist eine nennenswerte Masse auf. Da das Schneidwerk **24** in der Regel schwebend geführt ist, das heißt seine Gewichts- und Betriebskräfte vollständig über den Schrägförderer **27** abgetragen werden, wirkt auf die Erntemaschine **1** insgesamt ein Drehmoment um eine Vorderachse **28** der Erntemaschine **1,** das in einer abhebenden Kraft auf eine Hinterachse **29** der Erntemaschine **1** resultiert. Die Hinterachse **29** der Erntemaschine **1** ist mithin während eines Erntebetriebs vergleichsweise schwach belastet, sodass Lasten, die ausgehend von einem Chassis **18** der Erntemaschine **1** über die Hinterachse **29** und die der Hinterachse **29** zugeordneten Räder in den Untergrund eingeleitet werden müssen, gut handhabbar sind.

Sobald jedoch die Erntemaschine **1** öffentliche Verkehrswege benutzt, insbesondere um von einem Feld zu einem anderen Feld zu fahren, ist es aufgrund der Breite des Schneidwerks **24** erforderlich, selbiges zu demontieren und in einer Längsausrichtung, in der eine Breitenachse des Schneidwerks **24** parallel zu einer Fahrtrichtung **22** der Erntemaschine **1** orientiert ist, über den jeweiligen Verkehrsweg zu transportieren. Hierbei ist es üblich, das Schneidwerk **24** mittels eines entsprechenden Anhängers an die Erntemaschine **1** anzuhängen und sodann mittels der Erntemaschine **1** zu dem nächsten Feld zu transportieren. Die Demontage des Schneidwerks **24** von dem Schrägförderer **27** und die daraufhin erfolgende Anhängung des Schneidwerks **24** an die Erntemaschine **1** hat zwei unmittelbare Effekte: zum einen entfällt die Drehmomentwirkung des Schneidwerks **24,** die effektiv die Hinterachse **29** entlastet. Zum anderen wird der Anhänger, mittels dessen das Schneidwerk **29** transportiert wird, typischerweise zumindest mittelbar mittels eines Zugmauls an die Hinterachse **29** angehängt, sodass eine durch den Anhänger bedingte vertikale Last zusätzlich über die Hinterachse **29** in den Untergrund abzutragen ist.

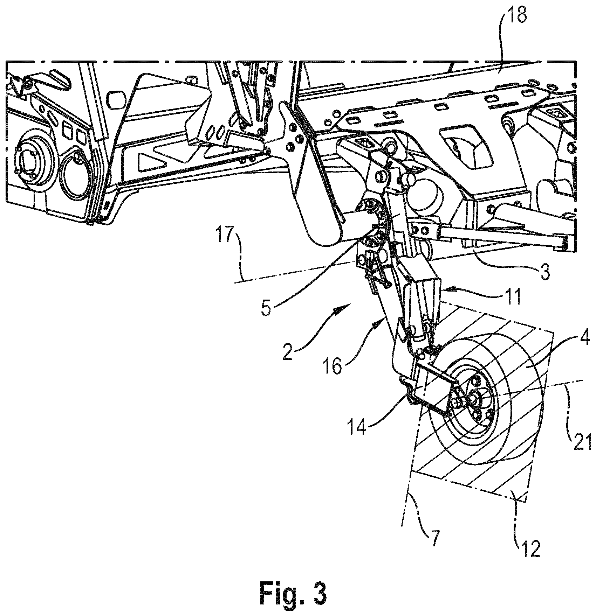

Aus diesem Grund verfügt die Erntemaschine **1** über die erfindungsgemäße Stützradeinheit **2.** Diese umfasst hier ein Stützrad **4,** das bei Vorliegen in der in **Figur 1** dargestellten Straßenposition eine unterstützende Wirkung hinsichtlich des über die Hinterachse **29** erfolgenden Lastabtrags ausüben kann. Die Straßenposition ist in **Figur 1** nur der Anschauung halber dargestellt, obwohl das Stützrad **4** während des in **Figur 1** dargestellten Erntebetriebs sich eigentlich in seiner angehobenen Feldposition befinden müsste. Während des Erntebetriebs ist die unterstützende Wirkung des Stützrads **4** typischerweise nicht erforderlich. Aus diesem Grund verfügt die Stützradeinheit **2** über ein Hebezeug **5,** mittels dessen das Stützrad **4** zwischen der abgesenkten Straßenposition und einer angehobenen Feldposition bewegbar ist. Ferner verfügt die Stützradeinheit **2** über einen Rahmen **3,** mittels dessen die Stützradeinheit **2** an die Erntemaschine **1** anschließbar ist. Dies ergibt sich besonders gut anhand von **Figur 3****.**

Damit das Stützrad **4** im Zuge einer Fahrt der Erntemaschine **1** über einen Verkehrsweg, insbesondere eine Straße, einer Lenkbewegung der Erntemaschine **1** folgen kann, ist das Stützrad **4** in dem gezeigten Beispiel innerhalb eines Winkelbereichs **6** frei um eine vertikale Drehachse **7** relativ zu dem Rahmen **3** verdrehbar. Hierbei ist die Stützradeinheit **2** derart ausgebildet, dass eine Rotationsachse **21,** um die das Stützrad **4** rotierbar ist, der Drehachse **7** nachläuft, sodass das Stützrad **4** über einen Nachlauf verfügt. Dies hat zur Folge, dass das Stützrad **4** einer Lenkbewegung der Erntemaschine **1** nachlaufen kann und dementsprechend nicht über eine Oberfläche einer jeweiligen Straße "radiert".

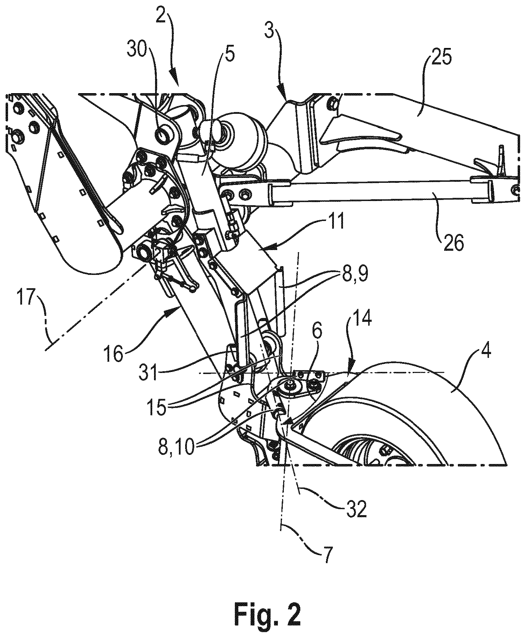

Die abgesenkte Straßenposition des Stützrades **4** ist besonders gut anhand des in **Figur 2** dargestellten Details erkennbar. Das Stützrad **4** ist in dem gezeigten Beispiel an einer Lagergabel **14** gelagert, die wiederum unter Ausbildung der beschriebenen Drehachse **7** an einer Schwinge **16** angeordnet ist. Die Schwinge **16** ist um eine Schwenkachse **17** relativ zu dem Rahmen **3** der Stützradeinheit **2** verschwenkbar ausgebildet. Ferner wirkt die Schwinge **16** mit dem Hebezeug **5** zusammen, das hier von einer elektro-hydraulischen Kolben-Zylinder-Einheit gebildet ist. Diese ist an ihrem ersten Ende **30,** das mit einem Zylinder des Hebezeugs 5 korrespondiert, in Kraft übertragender Weise mit dem Rahmen **3** und mit ihrem zweiten Ende **31,** das mit einem Kolben des Hebezeugs **5** korrespondiert, mit der Schwinge **16** verbunden. Bei Vorliegen des Stützrades **4** in seiner Straßenposition ist der Kolben des Hebezeugs **5** maximal aus dem zugeordneten Zylinder ausgefahren. Mittels eines Betriebs des Hebezeugs **5** wird der Kolben in den Zylinder eingezogen, wodurch die Schwinge **16** um die Schwenkachse **17** relativ zu dem Rahmen **3** verschwenkt wird. Aufgrund der Anordnung des Stützrades **4** bzw. der Lagergabel **14** an der Schwinge **16** geht diese Verschwenkung unmittelbar mit einer Anhebung des Stützrades **4** von dem Untergrund einher. Hierbei wird das Stützrad **4** relativ zu dem Rahmen **3** auf einer Kreisbahn um die Schwenkachse **17** bewegt.

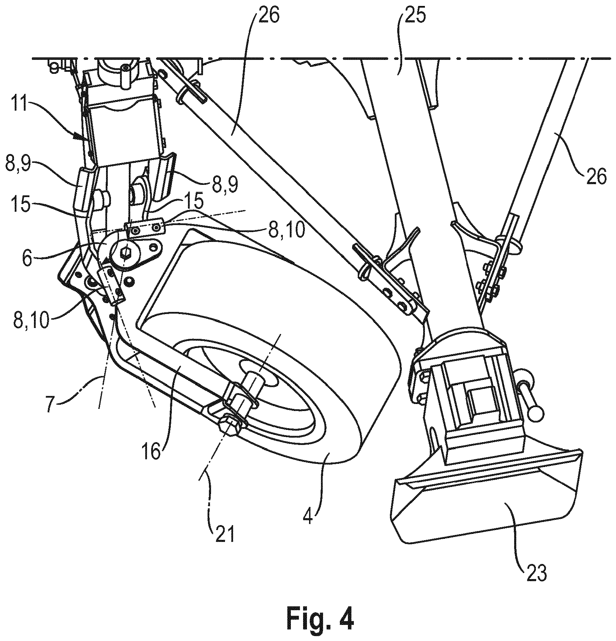

In dem Moment, in dem das Stützrad **4** seinen Kontakt zu dem jeweiligen Untergrund verliert, ist es grundsätzlich innerhalb des Winkelbereichs **6** frei um die Drehachse **7** relativ zu dem Rahmen **3** verdrehbar. Diese freie Verdrehbarkeit birgt ein Beschädigungsrisiko, da das Stützrad **4** grundsätzlich mit anderen Gegenständen der Stützradeinheit **2** oder der Erntemaschine **1** kollidieren kann. In dem gezeigten Beispiel umfasst die Stützradeinheit **2** beispielsweise einen sich in Fahrtrichtung **22** der Erntemaschine **1** von der Erntemaschine **1** weg erstreckenden Träger **25,** ein dessen der Erntemaschine **1** abgewandtem Ende ein nach hinten verlagertes Zugmaul **23** angeordnet ist. Dieses dient dazu, einen jeweiligen Anhänger, mittels dessen insbesondere in beschriebener Weise das Schneidwerk **24** transportierbar ist, an die Stützradeinheit **2** und mithin mittelbar an die Erntemaschine **1** zu koppeln. Zwecks Stabilisierung des Trägers **25** wirkt dieser mit zwei schräg angeordneten Streben **26** zusammen, die sich insbesondere anhand von **Figur 4** ergeben. Besagte Figur veranschaulicht zudem, dass die beschriebene Kollisionsgefahr zwischen dem Stützrad und einem anderen Gegenstand beispielsweise hinsichtlich einer solchen Strebe **26** bestehen kann, wenn das Stützrad **4** in einer von dem Untergrund abgehobenen Position frei um seine Drehachse **7** verdrehbar ist und mithin unkontrolliert "hin und her schlagen" kann.

Um die Verdrehbarkeit des Stützrades **4** um seine Drehachse **7** zumindest zu beschränken, verfügt die Stützradeinheit **2** erfindungsgemäß über eine Arretiereinrichtung **8.** Diese umfasst in dem gezeigten Beispiel zwei Führungselemente **9** sowie zwei Arretierelemente **10.** Die Führungselemente **9** sind hier gemeinsam an einer einstückigen Führungseinrichtung **11** ausgebildet, die in dem gezeigten Beispiel in Kraft übertragender Weise mit dem Zylinder des Hebezeugs **5** verbunden ist. Die Führungselemente **9,** die hier von langgestreckten, parallel zueinander verlaufenden Führungsleisten gebildet sind, sind in einem Abstand zueinander angeordnet. Die Arretierelemente **10** sind dem Stützrad **4** zugeordnet und befinden sich an der Lagergabel **14.** Anders als die Führungselemente **9** sind die Arretierelemente **10** nicht parallel zueinander angeordnet, sondern schräg aufeinander zulaufend orientiert. Insbesondere sind die Arretierelemente **10** spiegelsymmetrisch bezogen auf eine die Drehachse **7** enthaltende Drehebene **12** orientiert, sodass die Arretierelemente **10** mit der Drehebene **12** jeweils den gleichen Winkel **13** einschließen. Die aufeinander zu laufende Orientierung der Arretierelemente **10** führt dazu, dass diese gemeinsam einen Arretierkeil bilden.

Die beschriebene Ausgestaltung der Arretiereinrichtung **8** hat zur Folge, dass die Bewegung des Stützrades **4** zwischen seiner Straßenposition und seiner angehobenen Feldposition mit einer Einschränkung der Drehbarkeit des Stützrades **4** um die Drehachse **7** einhergeht, die das Stützrad **4** bei Vorliegen in seiner Straßenposition grundsätzlich aufweist. Diese Einschränkung ergibt sich infolge einer Relativbewegung, die die Arretierelemente **10** bezogen auf die Führungselemente **9** im Zuge der Bewegung des Stützrades **4** mittels des Hebezeugs **5** ausführen. Ausgehend von der in **Figur 2** dargestellten Straßenposition des Stützrades **4** werden die Arretierelemente **10** gemeinsam mit dem Stützrad **4** entlang einer Kreisbahn um die Schwenkachse **17** bewegt, sobald die Schwinge **16** mittels des Hebezeugs **5** angehoben wird. Da die Führungseinrichtung **11** mit den Führungselementen **9** an dem Zylinder des Hebezeugs **5** angeordnet ist und der Zylinder sich im Zuge des Betriebs des Hebezeugs **5** nicht oder zumindest nicht wesentlich bewegt, folgen die Führungselemente **9** der Bewegung des Stützrades **4** nicht. Dies hat zur Folge, dass die Arretierelemente **10** zunehmend zwischen die Führungselemente **9** "eingezogen" werden, sodass eine Drehbewegung des Stützrades **4** um die Drehachse **7** früher oder später zu einem Anschlag der Arretierelemente **10** an den Führungselementen **9** führt. Hierdurch ist die Beschränkung der Drehbarkeit des Stützrades **4** bedingt, die mittels Wirkung der Arretiereinrichtung **8** hervorgerufen wird. Der Bereich, innerhalb dessen das Stützrad **4** trotz der Wirkung der Arretiereinrichtung **8** noch um die Drehachse **7** drehbar ist, wird hier als Arretierbereich bezeichnet.

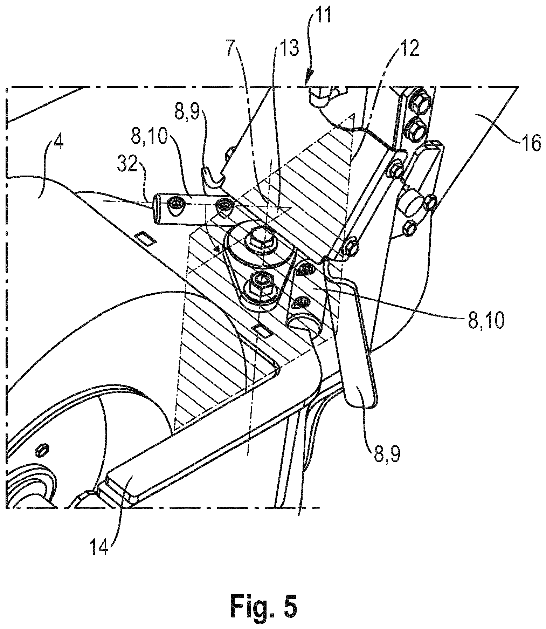

Die Ausgestaltung der Arretierelemente **10** als Arretierkeil hat ferner zur Folge, dass die Arretierwirkung der Arretiereinrichtung **8** sich mit zunehmender Bewegung des Stützrades **4** in Richtung seiner Feldposition verändert. Dies liegt darin begründet, dass der Arretierkeil mit zunehmendem Anheben des Stützrades **4** tiefer zwischen die Führungselemente **9** eintritt, worauf hin der Arretierbereich sukzessive reduziert wird. Bei Erreichen der Straßenposition des Stützrades **4,** die sich insbesondere anhand von **Figur 5** ergibt, liegen beide Arretierelemente **10** unmittelbar an den ihnen zugeordneten Führungselementen **9** der Arretiereinrichtung **8** an, sodass die Verdrehbarkeit des Stützrades **4** um die Drehachse **7** vollständig blockiert ist. Hierdurch wird der gewünschte Effekt erzielt, dass das Stützrad **4** bei einer Fahrt der Erntemaschine **1** über einen Verkehrsweg kein Beschädigungsrisiko birgt, da eine Kollision infolge unerwünschter Drehung des Stützrades **4** um die Drehachse **7** verhindert ist.

In dem gezeigten Beispiel weist die Stützradeinheit **2** ferner einen Anschlag **15** auf, der den Winkelbereich **6,** innerhalb dessen das Stützrad **4** bei Vorliegen in seiner Straßenposition frei um die Drehachse **7** verdrehbar ist, begrenzt. Bei Vorliegen des Stützrades **4** in seiner Straßenposition ist die Arretiereinrichtung **8** wirkungslos. Die Begrenzung des Winkelbereichs **6** erfolgt mittels einer Wechselwirkung zwischen den Arretierelementen **10** und dem Anschlag **15,** wie sich insbesondere anhand von **Figur 4** ergibt. In der dort dargestellten Position des Stützrades **4** befindet sich das in Fahrtrichtung **22** der Erntemaschine **1** betrachtet rechte Arretierelement **10** in unmittelbaren Kontakt mit dem ihm zugeordneten Anschlag **15,** sodass das Stützrad **4** nicht weiter gegen den Uhrzeigersinn um die Drehachse **7** verdreht werden kann. Der Winkelbereich **6,** innerhalb dessen die Drehung des Stützrades **4** bei Vorliegen desselben in seiner Straßenposition grundsätzlich möglich ist, ist mithin durch die Orientierung der Längsachsen **32** der beiden Arretierelemente **10** relativ zueinander definiert. In dem gezeigten Beispiel schließen die Längsachsen **32** der Arretierelemente **10** mit der Drehebene **12** jeweils einen Winkel von ca. 40° ein. Auf diese Weise beträgt ein Komplementärwinkel, der sich zwischen einem jeweiligen Arretierelement **10** und einer zu der Drehebene **12** orthogonalen, senkrecht orientierten Ebene erstreckt, ca. 50°. Der gesamte Winkelbereich **6,** innerhalb dessen die Lagergabel **14** bzw. das Stützrad **4** um die Drehachse **7** bei Vorliegen des Stützrades **4** in seiner Straßenposition schwenkbar ist, beträgt mithin in dem gezeigten Beispiel insgesamt 100°, wobei bezogen auf eine Nulllage des Stützrades **4** sich der Winkelbereich **6** zu jeweils 50° zu jeder Seite erstreckt. An seinen einander gegenüberliegenden Enden ist der Winkelbereich **6** durch das Zusammenwirken der Arretierelemente **10** mit den Anschlägen **15** begrenzt, wobei ein jeweiliges Arretierelement **10** mit einem zugeordneten Anschlag **15** kollidiert und hierdurch eine weitere Verdrehung des Stützrades **4** um die Drehachse **7** verhindert.

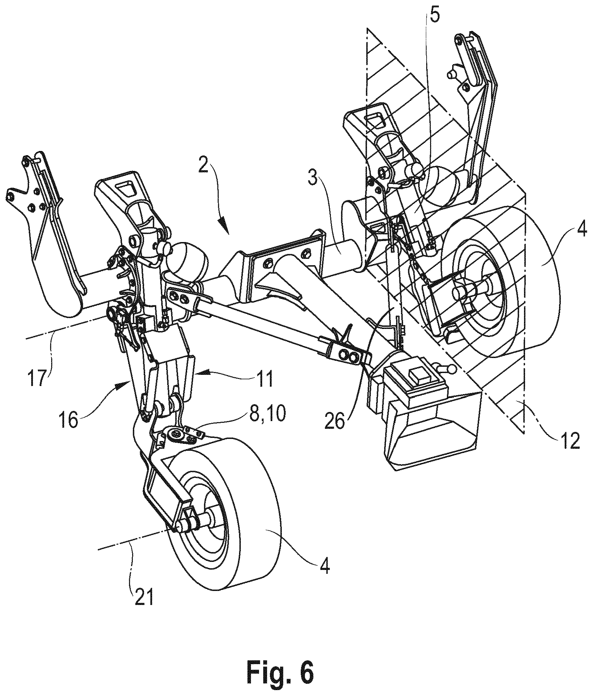

Das zweite Ausführungsbeispiel, das in **Figur 6** veranschaulicht ist, unterscheidet sich von dem ersten Ausführungsbeispiel lediglich dadurch, dass die Stützradeinheit **2** zwei Stützräder **4** aufweist. Diese sind in **Figur 6** der Anschaulichkeit halber in unterschiedlichen Positionen dargestellt, wobei das in **Figur 6** links dargestellt Stützrad **4** sich in seiner Straßenposition und das rechts dargestellte Stützrad **4** sich in seiner Feldposition befinden. Die Darstellung veranschaulicht zudem, dass das sich in seiner Feldposition befindende rechte Stützrad **4** ohne Weiteres mit der Strebe **26** kollidieren könnte, wenn es weiterhin frei um seine Drehachse **7** relativ zu dem Rahmen **3** verdrehbar wäre. Dieses Kollisionsrisiko ist mittels der Arretiereinrichtung **8** effektiv unterbunden.

### Bezugszeichenliste

- 1: Erntemaschine
- 2: Stützradeinheit
- 3: Rahmen
- 4: Stützrad
- 5: Hebezeug
- 6: Winkelbereich
- 7: Drehachse
- 8: Arretiereinrichtung
- 9: Führungselement
- 10: Arretierelement
- 11: Führungseinrichtung
- 12: Drehebene
- 13: Winkel
- 14: Lagergabel
- 15: Anschlag
- 16: Schwinge
- 17: Schwenkachse
- 18: Chassis
- 19: Arbeitsorgan
- 20: Arbeitsorgan
- 21: Rotationsachse
- 22: Fahrtrichtung
- 23: Zugmaul
- 24: Schneidwerk
- 25: Träger
- 26: Strebe
- 27: Schrägförderer
- 28: Vorderachse
- 29: Hinterachse
- 30: Ende
- 31: Ende
- 32: Längsachse

## Patentansprüche

1. Stützradeinheit (2) für eine selbstfahrende Erntemaschine (1), insbesondere einen Mähdrescher, umfassend
- mindestens einen Rahmen (3),
- mindestens ein Stützrad (4) sowie
- mindestens ein Hebezeug (5),
wobei die Stützradeinheit (2) mittels des Rahmens (3) in Kraft übertragender Weise mit einer übergeordneten Erntemaschine (1) verbindbar ist,
wobei das Stützrad (4) mittels des Hebezeugs (5) zwischen einer angehobenen Feldposition und einer abgesenkten Straßenposition überführbar ist,
wobei das Stützrad (4) zumindest bei Vorliegen in seiner Straßenposition zumindest in einem Winkelbereich (6) relativ zu dem Rahmen (3) um eine vertikale Drehachse (7) drehbar gelagert ist
**gekennzeichnet durch**
eine Arretiereinrichtung (8) zur Reduktion des Winkelbereichs, innerhalb dessen das Stützrad um die Drehachse (7) drehbar ist und mittels derer das Stützrad (4) im Zuge seiner
Überführung zwischen der Feldposition und der Straßenposition zumindest zeitweise derart führbar ist, dass die bei Vorliegen des Stützrads (4) in seiner Straßenposition gegebene Drehbarkeit des Stützrads (4) um dessen Drehachse (7) eingeschränkt ist, wobei die Drehbarkeit des Stützrads (4) - ausgehend von seiner Straßenposition betrachtet - mit zunehmender Anhebung in Richtung der Feldposition zunehmend eingeschränkt ist, wobei vorzugsweise das Stützrad (4) bei Erreichen der Feldposition vollständig arretiert ist..

2. Stützradeinheit (2) nach Anspruch 1, **dadurch gekennzeichnet, dass** die Arretiereinrichtung (8)
- mindestens zwei dem Rahmen (3) zugeordnete Führungselemente (9) sowie
- mindestens ein dem Stützrad (4) zugeordnetes Arretierelement (10) umfasst,
wobei die Führungselemente (9) dazu geeignet sind, mit dem Arretierelement (10) derart zusammenzuwirken, dass das Arretierelement (10) im Zuge einer mittels des Hebezeugs (5) bewirkten Bewegung des Stützrads (4) zwischen den Führungselementen (9) einfassbar ist, sodass eine Drehung des Stützrads (4) um seine Drehachse (7) relativ zu dem Rahmen (3) mittels Anschlags des Arretierelements (10) an mindestens einem der Führungselemente (9) zumindest teilweise, vorzugsweise vollständig, blockierbar ist.

3. Stützradeinheit (2) nach Anspruch 2, **dadurch gekennzeichnet, dass** die Führungselemente (9) von langgestreckten Führungsleisten gebildet sind.

4. Stützradeinheit (2) nach Anspruch 2 oder 3, **dadurch gekennzeichnet, dass** die Führungselemente (9) gemeinsam an einer, vorzugsweise einstückigen, Führungseinrichtung (11) ausgebildet sind, wobei die Führungseinrichtung (1) in Kraft übertragender Weise mittelbar oder unmittelbar an dem Rahmen (3), vorzugsweise an einem zumindest im Wesentlichen feststehenden Teil des Hebezeugs (5), angeordnet ist, sodass das Stützrad (4) im Zuge seiner mittels des Hebezeugs (5) bewirkten Bewegung relativ zu der Führungseinrichtung (11) bewegbar ist.

5. Stützradeinheit (2) nach einem der Ansprüche 2 bis 4, **gekennzeichnet durch** mindestens zwei dem Stützrad (4) zugeordnete Arretierelemente (10), die vorzugsweise auf einander gegenüberliegenden Seiten der Drehachse (7) des Stützrads (4) angeordnet sind, wobei vorzugsweise jeweils eines der Arretierelemente (10) einem der Führungselemente (9) zugeordnet ist.

6. Stützradeinheit (2) nach Anspruch 5, **dadurch gekennzeichnet, dass** die Arretierelemente (10) bezogen auf eine Drehebene (12), die die Drehachse (7) enthält, spiegelsymmetrisch angeordnet sind, wobei vorzugsweise die Arretierelemente (10) gegenläufig geneigt bezogen auf die Drehebene (12) angeordnet sind, sodass sie gemeinsam einen Arretierkeil bilden.

7. Stützradeinheit (2) nach Anspruch 6, **dadurch gekennzeichnet, dass** mindestens ein Arretierelement (10) bei Vorliegen des Stützrads (4) in seiner Straßenposition mit der Drehebene (12) einen Winkel (13) von mindestens 40°, vorzugsweise mindestens 45°, weiter vorzugsweise mindestens 50°, einschließt.

8. Stützradeinheit (2) nach einem der Ansprüche 5 bis 7, **dadurch gekennzeichnet, dass** die Arretierelemente (10) an einer Lagergabel (14) angeordnet sind, wobei die Lagergabel (14) mit mindestens einem Anschlag (15) zusammenwirkt, der dazu geeignet ist, derart mit den Arretierelementen (10) zusammenzuwirken, dass eine Drehbarkeit des in seiner Straßenposition vorliegenden Stützrads (4) infolge Anschlags der Arretierelemente (10) an dem Anschlag (15) auf den Winkelbereich (6) begrenzt ist.

9. Stützradeinheit (2) nach einem der Ansprüche 1 bis 8, **dadurch gekennzeichnet, dass** der Rahmen (3) mindestens eine Schwinge (16) umfasst, an der das Stützrad (4) gelagert ist, wobei die Schwinge (16) unter Ausbildung einer, vorzugsweise horizontalen, Schwenkachse (17) relativ zu dem übrigen Rahmen (3) verschwenkbar ist.

10. Stützradeinheit (2) nach Anspruch 9, **dadurch gekennzeichnet, dass** das Hebezeug (5) mit der Schwinge (16) zusammenwirkt, sodass mittels Betriebs des Hebezeugs (5) die Schwinge (16) zwischen einer Hochstellung und einer Tiefstellung verschwenkbar ist, wobei vorzugsweise die Hochstellung der Schwinge (16) mit der Feldposition des Stützrads (4) und die Tiefstellung der Schwinge (16) mit der Straßenposition des Stützrads (4) korrespondieren.

11. Stützradeinheit (2) nach einem der Ansprüche 5 bis 8 in Kombination mit einem der Ansprüche 10 oder 11, **dadurch gekennzeichnet, dass** der von den Arretierelementen (10) gebildete Arretierkeil im Zuge der Verschwenkung der Schwinge (16) zwischen die Führungselemente (9) einziehbar ist, sodass mit zunehmendem Einzug des Arretierkeils zwischen die Führungselemente (9) ein Arretierbereich, innerhalb dessen das Stützrad (4) um dessen Drehachse (7) drehbar ist, verkleinert wird, vorzugsweise bei Erreichen der Hochstellung der Schwinge (16) auf null verkleinert ist.

12. Selbstfahrende Erntemaschine (1), insbesondere Mähdrescher, umfassend
- ein Chassis (18),
- mindestens ein Arbeitsorgan (19) zum Schneiden von Pflanzen,
- mindestens ein Arbeitsorgan (20) zur Verarbeitung geschnittener Pflanzen sowie
- mindestens eine Stützradeinheit (2) nach einem der Ansprüche 1 bis 12.

13. Erntemaschine (1) nach Anspruch 12, **dadurch gekennzeichnet, dass** eine Rotationsachse (21) mindestens eines Stützrads (4) der Stützradeinheit (2) zumindest bei Vorliegen des Stützrads (4) in seiner Feldposition, in der es mittels der Arretiereinrichtung (8) arretiert ist, quer zu einer Fahrtrichtung (22) der Erntemaschine (1) orientiert ist.

## Claims

1. Support wheel unit (2) for a self-propelled harvester (1), in particular a combine harvester, comprising
- at least one frame (3),
- at least one support wheel (4) and
- at least one hoist (5),
wherein the support wheel unit (2) can be connected to a higher-level harvester (1) by means of the frame (3) in a force-transmitting manner,
wherein the support wheel (4) can be transferred between a raised field position and a lowered road position by means of the hoist (5),
wherein the support wheel (4) is mounted rotatably relative to the frame (3) about a vertical axis of rotation (7) at least in an angular range (6) at least when in its road position,
**characterised by**
a locking device (8) for reducing the angular range within which the support wheel is rotatable about the axis of rotation (7) and by means of which the support wheel (4) can be guided at least temporarily in the course of its transfer between the field position and the road position in such a way that the rotatability of the support wheel (4), which is given when the support wheel (4) is present in its road position, is restricted about its axis of rotation (7), wherein the rotatability of the support wheel (4) - viewed from its road position - is increasingly restricted with increasing lifting in the direction of the field position, wherein preferably the support wheel (4) is completely locked when the field position is reached..

2. Support wheel unit (2) according to claim 1, **characterised in that** the locking device (8)
- at least two guide elements (9) assigned to the frame (3) and
- comprises at least one locking element (10) associated with the support wheel (4),
wherein the guide elements (9) are suitable for co-operating with the locking element (10) in such a way that the locking element (10) can be engaged between the guide elements (9) in the course of a movement of the support wheel (4) effected by means of the hoist (5), so that a rotation of the support wheel (4) about its axis of rotation (7) relative to the frame (3) can be at least partially, preferably completely, blocked by means of the stop of the locking element (10) on at least one of the guide elements (9).

3. Support wheel unit (2) according to claim 2, **characterised in that** the guide elements (9) are formed by elongated guide rails.

4. Support wheel unit (2) according to claim 2 or 3, **characterised in that** the guide elements (9) are formed together on a, preferably one-piece, guide device (11), wherein the guide device (1) is arranged in a force-transmitting manner indirectly or directly on the frame (3), preferably on an at least substantially fixed part of the hoist (5), so that the support wheel (4) is movable relative to the guide device (11) in the course of its movement effected by means of the lifting gear (5).

5. Support wheel unit (2) according to one of claims 2 to 4, **characterised by** at least two locking elements (10) assigned to the support wheel (4), which are preferably arranged on opposite sides of the axis of rotation (7) of the support wheel (4), wherein preferably one of the locking elements (10) is assigned to each of the guide elements (9).

6. Support wheel unit (2) according to claim 5, **characterised in that** the locking elements (10) are arranged in mirror symmetry with respect to a plane of rotation (12) containing the axis of rotation (7), the locking elements (10) preferably being arranged inclined in opposite directions with respect to the plane of rotation (12), so that together they form a locking wedge.

7. Support wheel unit (2) according to claim 6, **characterised in that** at least one locking element (10) forms an angle (13) of at least 40°, preferably at least 45°, more preferably at least 50°, with the plane of rotation (12) when the support wheel (4) is in its road position.

8. Support wheel unit (2) according to one of claims 5 to 7, **characterised in that** the locking elements (10) are arranged on a bearing fork (14), wherein the bearing fork (14) cooperates with at least one stop (15) which is suitable for cooperating with the locking elements (10) in such a way that a rotatability of the support wheel (4) in its road position is limited to the angular range (6) as a result of the locking elements (10) abutting against the stop (15).

9. Support wheel unit (2) according to one of claims 1 to 8, **characterised in that** the frame (3) comprises at least one rocker (16) on which the support wheel (4) is mounted, the rocker (16) being pivotable relative to the remaining frame (3), forming a, preferably horizontal, pivot axis (17).

10. Support wheel unit (2) according to claim 9, **characterised in that** the hoist (5) cooperates with the rocker (16), so that the rocker (16) can be pivoted between a high position and a low position by means of operation of the hoist (5), the high position of the rocker (16) preferably corresponding to the field position of the support wheel (4) and the low position of the rocker (16) corresponding to the road position of the support wheel (4).

11. Support wheel unit (2) according to one of claims 5 to 8 in combination with one of claims 10 or 11, **characterised in that** the locking wedge formed by the locking elements (10) can be retracted between the guide elements (9) in the course of the pivoting of the rocker (16), so that, with increasing retraction of the locking wedge between the guide elements (9), a locking range, within which the support wheel (4) is rotatable about its axis of rotation (7), is reduced, preferably to zero when the rocker (16) reaches the raised position.

12. Self-propelled harvesting machine (1), in particular a combine harvester, comprising
- a chassis (18),
- at least one working member (19) for cutting plants,
- at least one working member (20) for processing cut plants and
- At least one support wheel unit (2) according to one of claims 1 to 12.

13. Harvester (1) according to claim 12, **characterised in that** an axis of rotation (21) of at least one support wheel (4) of the support wheel unit (2) is oriented transversely to a direction of travel (22) of the harvester (1), at least when the support wheel (4) is present in its field position, in which it is locked by means of the locking device (8).

## Revendications

1. Unité de roue de support (2) destinée à une machine de récolte automotrice (1), en particulier une moissonneuse-batteuse, comprenant
- au moins un cadre (3),
- au moins une roue de support (4), et
- au moins un dispositif de levage (5),
l'unité de roue de support (2) pouvant être reliée à l'aide du cadre (3) à une machine de récolte (1) qui en est dotée, de manière à transmettre des forces,
la roue de support (4) pouvant être déplacée à l'aide du dispositif de levage (5) entre une position sur champ relevée et une position sur route abaissée,
la roue de support (4), au moins lorsqu'elle occupe sa position sur route, étant montée avec possibilité de rotation par rapport au cadre (3), au moins dans une plage angulaire (6), autour d'un axe de rotation (7) vertical,
**caractérisée en ce qu'**elle comprend
un dispositif de verrouillage (8) destiné à réduire la plage angulaire dans laquelle la roue de support peut tourner autour de l'axe de rotation (7), et permettant de guider la roue de support (4) au moins momentanément, au cours de son déplacement entre la position sur champ et la position sur route, de manière à limiter la possibilité de rotation de la roue de support (4) autour de son axe de rotation (7), qui existe lorsque la roue de support (4) occupe sa position sur route, sachant que la possibilité de rotation de la roue de support (4) - considérée en partant de sa position sur route - est limitée progressivement à mesure du levage en direction de la position sur champ, la roue de support (4) pouvant de préférence être bloquée totalement lorsque la position sur champ est atteinte.

2. Unité de roue de support (2) selon la revendication 1, **caractérisée en ce que** le dispositif de verrouillage (8) comprend
- au moins deux éléments de guidage (9) associés au cadre (3), et
- au moins un élément de verrouillage (10) associé à la roue de support (4),
les éléments de guidage (9) étant adaptés pour coopérer avec l'élément de verrouillage (10) de manière à ce que, au cours d'un mouvement de la roue de support (4) opéré par le dispositif de levage (5), l'élément de verrouillage (10) puisse être enserré entre les éléments de guidage (9), de sorte qu'une rotation de la roue de support (4) autour de son axe de rotation (7), par rapport au cadre (3), peut être bloquée au moins en partie, de préférence totalement, par la venue en butée de l'élément de verrouillage (10) contre au moins un des éléments de guidage (9).

3. Unité de roue de support (2) selon la revendication 2, **caractérisée en ce que** les éléments de guidage (9) sont constitués de rails de guidage allongés.

4. Unité de roue de support (2) selon la revendication 2 ou 3, **caractérisée en ce que** les éléments de guidage (9) sont réalisés ensemble sur un dispositif de guidage (11), de préférence monobloc, le dispositif de guidage (1) étant placé indirectement ou directement sur le cadre (3), de préférence sur un élément au moins sensiblement fixe du dispositif de levage (5), de manière à transmettre des forces, de sorte que la roue de support (4) peut être déplacée par rapport au dispositif de guidage (11) lors de son mouvement opéré à l'aide du dispositif de levage (5).

5. Unité de roue de support (2) selon l'une des revendications 2 à 4, **caractérisée en ce qu'**elle comprend au moins deux éléments de verrouillage (10) associés à la roue de support (4), qui sont de préférence disposés sur des côtés opposés de l'axe de rotation (7) de la roue de support (4), sachant que respectivement l'un des éléments de verrouillage (10) est de préférence associé à l'un des éléments de guidage (9).

6. Unité de roue de support (2) selon la revendication 5, **caractérisée en ce que** les éléments de verrouillage (10) sont disposés avec symétrie spéculaire par rapport à un plan de rotation (12) contenant l'axe de rotation (7), sachant que les éléments de verrouillage (10) sont de préférence disposés de manière à être inclinés dans des sens opposés par rapport au plan de rotation (12), de sorte qu'ils forment ensemble un coin de verrouillage.

7. Unité de roue de support (2) selon la revendication 6, **caractérisée en ce que**, lorsque la roue de support (4) occupe sa position sur route, au moins un élément de verrouillage (10) forme avec le plan de rotation (12) un angle (13) d'au moins 40°, de préférence d'au moins 45°, et de manière particulièrement avantageuse d'au moins 50°.

8. Unité de roue de support (2) selon l'une des revendications 5 à 7, **caractérisée en ce que** les éléments de verrouillage (10) sont montés sur une fourche de support (14), la fourche de support (14) coopérant avec au moins une butée (15) qui est adaptée pour coopérer avec les éléments de verrouillage (10) de manière à ce qu'une possibilité de rotation de la roue de support (4), qui occupe sa position sur route, soit limitée à la plage angulaire (6) suite à la venue en contact des éléments de verrouillage (10) contre la butée (15).

9. Unité de roue de support (2) selon l'une des revendications 1 à 8, **caractérisée en ce que** le cadre (3) comprend au moins un bras oscillant (16) sur lequel est montée la roue de support (4), le bras oscillant (16) pouvant être pivoté par rapport au reste du cadre (3), en formant un axe de pivotement (17), de préférence horizontal.

10. Unité de roue de support (2) selon la revendication 9, **caractérisée en ce que** le dispositif de levage (5) coopère avec le bras oscillant (16), de sorte que le fonctionnement du dispositif de levage (5) permet de faire pivoter le bras oscillant (16) entre une position haute et une position basse, la position haute du bras oscillant (16) correspondant de préférence à la position sur champ de la roue de support (4) et la position basse du bras oscillant (16) correspondant à la position sur route de la roue de support (4).

11. Unité de roue de support (2) selon l'une des revendications 5 à 8 en combinaison avec l'une des revendications 10 ou 11, **caractérisée en ce que** le coin de verrouillage formé par les éléments de verrouillage (10) peut être rentré entre les éléments de guidage (9) au cours du pivotement du bras oscillant (16), de sorte que, à mesure que le coin de verrouillage est rentré entre les éléments de guidage (9), une zone de verrouillage, à l'intérieur de laquelle la roue de support (4) peut être tournée autour de son axe de rotation (7), est réduite et est de préférence ramenée à zéro lorsque le bras oscillant (16) atteint la position haute.

12. Machine de récolte automotrice (1), en particulier moissonneuse-batteuse, comprenant
- un châssis (18),
- au moins un organe de travail (19) destiné à la coupe de plantes,
- au moins un organe de travail (20) destiné au traitement de plantes coupées, ainsi que
- au moins une unité de roue de support (2) selon l'une des revendications 1 à 12.

13. Machine de récolte (1) selon la revendication 12, **caractérisée en ce qu'**un axe de rotation (21) d'au moins une roue de support (4) de l'unité de roue de support (2) est orienté transversalement à une direction de déplacement (22) de la machine de récolte (1), au moins lorsque la roue de support (4) occupe sa position sur champ dans laquelle elle est bloquée au moyen du dispositif de verrouillage (8).
